# EUROPÄISCHE PATENTSCHRIFT

(11) **EP 2 760 009 B1**
(45) Veröffentlichungstag und Bekanntmachung des Hinweises auf die Patenterteilung: **16.06.2021**
(21) Anmeldenummer: 14152213.6
(22) Anmeldetag: 22.01.2014
(51) Int. Cl.: G09F 13/04

(54) **Hinweistafel, insbesondere für eine Notbeleuchtungsanlage**
Information display panel, in particular for an emergency lighting system
Tableau indicateur, notamment pour une installation d'éclairage de secours

(30) Priorität: 22.01.2013 AT 500412013
(43) Veröffentlichungstag der Anmeldung: 30.07.2014
(73) Patentinhaber: DIN-Dietmar Nocker Facilitymanagement GmbH, 4030 Linz (AT)
(72) Erfinder:
(74) Vertreter: Jell, Friedrich

(56) Entgegenhaltungen:
- WO-A1-01/73731
- WO-A1-2010/035230
- WO-A2-2005/022216
- US-A- 1 469 946

## Beschreibung

Die Erfindung betrifft eine Hinweistafel, insbesondere für eine Notbeleuchtungsanlage, mit einer Anzeige, mit zur Hinterleuchtung der Anzeige vorgesehenen lichtleitenden Platte, die Breit- und Schmalseiten sowie mindestens eine Ausnehmung aufweist, mit einem ersten Leuchtmittel, das mit der lichtleitenden Platte optisch verbunden die Anzeige über die Breitseite der lichtleitenden Platte hinterleuchtet, mit mindestens einem zweiten in der Ausnehmung der lichtleitenden Platte vorgesehen und damit optisch verbundenen Leuchtmittel, das über mindestens eine der Schmalseiten der lichtleitenden Platte die Umgebung der Hinweistafel wenigstens bereichsweise beleuchtet, und mit mindestens einer von der lichtleitenden Platte ausgebildeten Linse, die mit dem zweiten Leuchtmittel optisch verbundenen ist.

Um eine Hinweistafel mit einer hinterleuchteten Anzeige auch zur Umgebungsbeleuchtung heranziehen zu können, ist es aus dem Stand der Technik bekannt (DE202006014352U1), zusätzlich zum ersten Leuchtmittel, das zur Hintergrundbeleuchtung der Anzeige verwendet wird, ein zweites LED-Leuchtmittel vorzusehen. Dieses zweite Leuchtmittel ist im unteren Bereich des Rahmens der Hinweistafel angeordnet und strahlt von dort aus ab, wobei diesem LED-Leuchtmittel außerdem eine optische Linse nachgeordnet ist, um die Abstrahlcharakteristik asymmetrisch zu verändern. Nachteilig stehen diese Konstruktionselemente zur Umgebungsbeleuchtung von der Hinweistafel ab, was bei ihrem Transport, ihrer Montage und/oder Reinigung zu einer erhöhten Gefahr von Beschädigungen führen kann. Eine verringerte Standfestigkeit der Hinweistafel ist daher gegeben. Zudem sind derartige Konstruktionselemente an der Hinweistafel vergleichsweise aufwendig vorzusehen und führen somit zu erhöhten Herstellungskosten.

Eine Hinweistafel gemäß dem Oberbegriff des Anspruchs 1 ist aus der WO01/73731A1 bekannt. Diese Hinweistafel weist eine aus zwei zusammengesetzten Schalen gebildete lichtleitende Platte auf, in deren Hohlraum bzw. inneren Ausnehmung sowohl ein erstes Leuchtmittel zur Hintergrundbeleuchtung der Anzeigen auf der Breitseite der lichtleitenden Platte als auch ein zweites Leuchtmittel zur Beleuchtung der Umgebung der Hinweistafel vorgesehen sind. Die zweiten Leuchtmittel strahlen zudem über eine Schmalseite der lichtleitenden Platte ab, wobei im optischen Weg der Leuchtmittel beide Schalen der Platte bzw. damit die Platte eine optische Linse ausbildet. Nachteilig bedarf es bei den Schalen hoher Passgenauigkeit, um einerseits ein unkontrolliertes Brechen und damit Austreten von Licht zu vermeiden und andererseits gewünschte optische Eigenschaften der gemeinsam ausgebildeten Linse sicherzustellen. Hinzu kommt, dass temperaturbedingte Verwerfungen der Schalen, die selbst durch die Abwärme der Leuchtmittel eintreten kann, die Schalen zu Spaltöffnungen neigen, was die Umgebungsbeleuchtung der Hinweistafel erheblich beeinträchtigt. Ein vergleichsweise hoher konstruktiver Aufwand ist damit gegeben, die optischen Beleuchtungseigenschaften einer Hinweistafel stets in engen Toleranzen zu halten.

Ein weiterer Stand der Technik ist aus der US1469946A, WO2010/035230A1 und WO2005/022216A2 bekannt.

Es ist daher die Aufgabe der Erfindung, eine Hinweistafel mit einer hintergrundbeleuchteten Anzeige der eingangs geschilderten Art derart zu verändern, dass eine standfeste Beleuchtung mithilfe kompakter Bauverhältnisse sichergestellt werden kann. Zudem soll die Produktion der Hinweistafel vergleichsweise kostengünstig möglich sein.

Die Erfindung löst die gestellte Aufgabe durch die Merkmale des Anspruchs 1.

Ist die das zweite Leuchtmittel aufnehmende Ausnehmung in einer Breitseite der lichtleitenden Platte, können kompakte Bauverhältnisse der Hinweistafel erhalten bleiben - trotzdem aber die Konstruktionsanforderungen zur lichtleitenden Platte erheblich gesenkt werden. Im Gegensatz zum Stand der Technik können nämlich aufwendige Passgenauigkeiten im optischen Weg des zweiten Leuchtmittels zur Umgebungsbeleuchtung unterbleiben, um hohe optische Eigenschaften zu erreichen. Zudem kann eine Ausnehmung im Vollmaterial der lichtleitenden Platte Spaltfreiheit garantieren, was die Standfestigkeit der Hinweistafel gegenüber Temperaturverwerfungen erhöht kann. Die Beleuchtungseigenschaften der Hinweistafel bleiben daher im Wesentlichen stets konstant, was die Abstrahlcharakteristik der Hinweistafel in engen Grenzen und Toleranzen hält. Eine besonders effektive und/oder genaue Umgebungsbeleuchtung kann dadurch geschaffen werden. Zudem stellt eine außenseitige Ausnehmung eine vergleichsweise einfache konstruktive Maßnahme dar, die es auf einfache Weise ermöglicht, eine individuelle Anpassung der optischen Eigenschaften einer Linse vorzunehmen. Eine derartige Ausnehmung kann auch relativ einfach und höchst variabel hergestellt werden, beispielsweise durch Fräsung, womit etwa im Vergleich zu Vorrichtungen, die über Spritzguss herzustellen sind, eine erheblich günstigere Hinweistafel erhalten werden kann. Jeglichen Anforderungen kann somit in leichter Weise entsprochen werden, was eine universell verwendbare Hinweistafel schaffen kann. Die erfindungsgemäße Hinweistafel kann sich daher durch Robustheit, durch Verbesserungen der Ausleuchtung, Erhellung bzw. Markierung eines Bereichs eines Raumes und/oder Objektes mit Kunstlicht und durch Kostengünstigkeit auszeichnen. Zudem kann sich damit die vom ersten Leuchtmittel zu hinterleuchtende Anzeige über die Ausnehmung erstrecken. Damit können beispielsweise die Mittel für die Umgebungsbeleuchtung vergleichsweise einfach konstruktiv optisch zu verdecken.

Im Allgemeinen wird erwähnt, dass unter optischer Linse jegliches optische Element zur Erzielung einer Abbildung bzw. zur Veränderung der Abstrahlcharakteristik des zweiten Leuchtmittels verstanden werden kann. Beispielsweise werden hierzu eine sphärische Linse, Sammellinse, Zerstreuungslinse, Fresnel-Linse, Stufenlinse etc. genannt. Im Allgemeinen wird weiter erwähnt, dass es sich bei der erfindungsgemäßen Hinweistafel um beispielsweise eine Sicherheitsbeleuchtung für eine nicht näher dargestellte Notbeleuchtungsanlage handeln kann. Als Anzeige kann diese Hinweistafel ein oder mehrere Piktogramme aufweisen, die hinterleuchtet werden. Weiter wird im Allgemeinen erwähnt, dass unter Breitseite einer Platte ihre Front- oder Rückseite erachtet werden kann, die durch Schmalseiten voneinander beabstandet sind.

Kompakte Bauverhältnisse können geschaffen werden, wenn das zweite Leuchtmittel mindestens eine lichtemittierende Diode aufweist. Vorzugsweise besteht das zweite Leuchtmittel aus einer oder mehreren Dioden.

Eine Linse kann auf einfache Weise konstruiert werden, wenn eine lichtbrechende Fläche einer Linse durch die plane Schmalseite der lichtleitenden Platte ausbildet wird. Zudem können damit der Herstellungsaufwand und weiters die Herstellungskosten der Hinweistafel reduzieren werden. Hinzu kommt, dass auf diese Weise die Hinweistafel frei von vorstehenden optischen Elementen gehalten werden kann, was die Gefahr an Beschädigungen, insbesondere im Bereich des optischen Wegs des zweiten Leuchtmittels, reduzieren kann.

Wird eine lichtbrechende Fläche einer Linse von einer der Ausnehmungsflächen der Ausnehmung ausbildet, kann das in dieser Ausnehmung vorgesehene zweite Leuchtmittel vergleichsweise einfach optisch mit der Platte gekoppelt werden, weil damit beispielsweise nachteilige Effekte - begründet durch eine Totalreflexion - vermeidbar sind. Vorteilhaft bildet diese Ausnehmungsfläche eine konkave oder konvexe lichtbrechende Fläche der Linse aus, um damit die Schmalseite plan halten zu können.

Bildet die lichtleitende Platte mindestens eine plankonvexe Linse aus, können die konstruktiven Eigenschaften der Platte genutzt werden, den Herstellungsaufwand der Linse zu verringern. So kann also die plane Seite der lichtleitenden Platte, insbesondere ihre Schmalseite, für die plane lichtbrechende Fläche der Linse herangezogen werden - etwa um das durch diese Linse ausfallende Licht den Anforderungen entsprechend zu lenken.

Eine weitere Linse kann dadurch gebildet werden, indem lichtbrechende Flächen einer Linse durch Ausnehmungsflächen zweier Ausnehmungen ausgebildet werden. Vorzugsweise wird die weitere Linse in derselben Breitseite der lichtleitenden Platte vorgesehen. Die genannten Vorteile hinsichtlich der einfachen Herstellung - etwa Fräsung - der Ausnehmung können auch hierbei aufrechterhalten werden.

Höchste Flexibilität in der Lösung von Beleuchtungsaufgaben, die die Umgebung der Hinweistafel betreffen, kann sich ergeben, wenn die lichtleitende Platte mindestens ein Linsensystem mit mehreren Linsen für das zweite Leuchtmittel ausbildet.

Bildet ein im Wärmeverbund mit dem zweiten Leuchtmittel stehender Kühlkörper einen Reflektor für ein in die lichtleitende Platte eingekoppeltes Anzeigelicht des ersten Leuchtmittels aus, kann mithilfe dieses Konstruktionselements eine unerwünschte Einkopplung von Licht des ersten Leuchtmittels in den optischen Weg der Umgebungsbeleuchtung vermieden werden. Eine besonders exakte Umgebungsbeleuchtung kann dadurch ermöglicht werden.

Eine vergleichsweise flache lichtleitende Platte und somit eine kompakte Hinweistafel kann trotz Vorsehen eines zweiten Leuchtmittels geschaffen werden, wenn der in die Ausnehmung eingesetzte Kühlkörper mit der lichtleitenden Platte bündig abschließt.

Eine vergleichsweise hohe Beleuchtungsstärke sowie auch eine gleichmäßige Leuchtdichteverteilung - selbst bei Verwendung einer oder mehrerer lichtemittierenden Dioden - können erreicht werden, wenn die Ausnehmung im Bereich der unteren Schmalseite der lichtleitenden Platte angeordnet ist.

Besteht das erste Leuchtmittel aus lichtemittierenden Dioden und ist diese und über mindestens eine, insbesondere die obere, Schmalseite der lichtleitenden Platte optisch verbunden, können kompakte Bauverhältnisse an der Hinweistafel gewährleistet werden.

Die Hintergrundbeleuchtung der Anzeige kann optisch ungestört bzw. trotz einer Ausnehmung vergleichsweise gleichmäßig erfolgen, wenn die Anzeige auf der, der Breitseite mit der Ausnehmung gegenüberliegenden Breitseite der lichtleitenden Platte vorgesehen ist. Zwischen der Ausnehmung und der Breitseite mit der Anzeige bildet sich nämlich ein Steg aus, der zur weiteren Leitung des Lichts des ersten Leuchtmittels beiträgt.

Vorteilhaft kann Vorstehendes auch dazu genutzt werden, dass die Anzeige mit der unteren Schmalseite der lichtleitenden Platte bündig abschließt, um den optischen Weg des zweiten Leuchtmittels vollständig zu verdecken. Die zusätzlichen Konstruktionsmerkmale an der Hinweistafel zur Beleuchtung seiner Umgebung bedingen daher keine Änderungen in den Abmessungen der Hinweistafel. Die erfindungsgemäße Hinweistafel kann daher höchst kompakt ausgeführt werden.

In den Figuren ist beispielsweise der Erfindungsgegenstand anhand mehrerer Ausführungsbeispiele näher dargestellt. Es zeigen
Fig. 1 eine teilweise auf- und abgerissene Ansicht einer Hinweistafel nach einem ersten Ausführungsbeispiel,
Fig. 2 eine abgerissene Schnittansicht nach II-II der Fig. 1 und
Fig. 3 eine aufgerissene Teilansicht zu einem weiteren Ausführungsbeispiel.

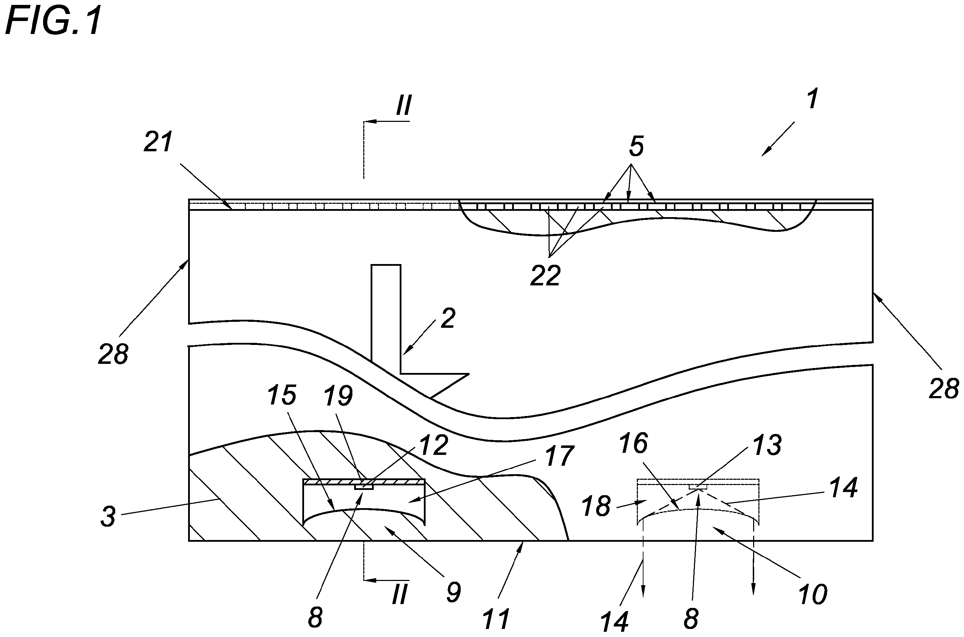

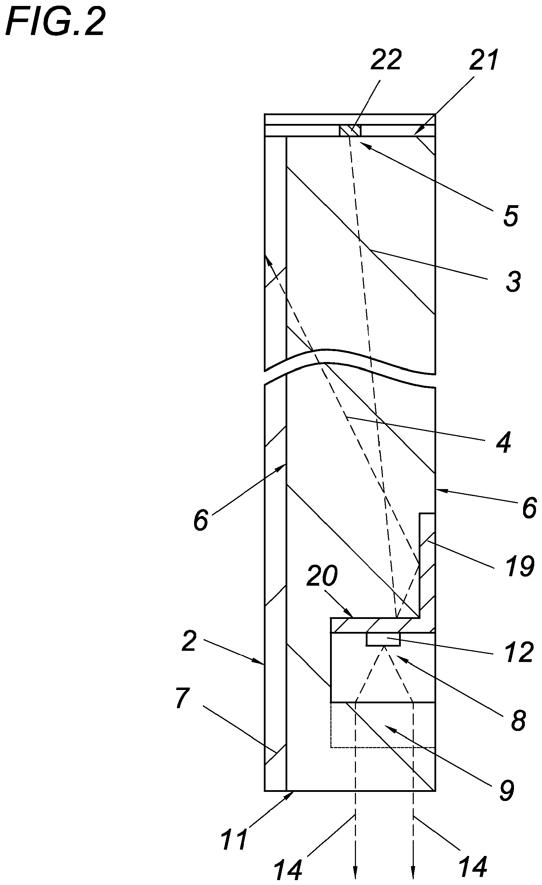

Die nach Fig. 1 beispielsweise dargestellte Hinweistafel 1 nach einem ersten Ausführungsbeispiel findet als Sicherheitsbeleuchtung bei einer nicht näher dargestellten Notbeleuchtungsanlage Verwendung. Zu diesem Zweck bildet die Anzeige 2 ein Piktogramm aus, das von einer lichtleitenden Platte 3 hinterleuchtet wird. Dieses Anzeigelicht 4 wird von einem ersten Leuchtmittel 5 in die lichtleitende Platte 3 eingebracht, wofür das erste Leuchtmittel 5 mit der lichtleitenden Platte 3 optisch verbunden bzw. damit gekoppelt ist. Die Lichtabstrahlung der Breitseite 6 der lichtleitenden Platte 3 hinterleuchtet die Anzeige 2 - wie insbesondere nach Fig. 2 ersichtlich. Diese Abstrahlung kann bekanntermaßen durch nicht näher dargestellte Oberflächenausnehmungen an der lichtleitenden Platte 3 vergleichmäßigt werden. Die Anzeige 2 ist auf einer Anzeigenplatte 7 vorgesehen, die an die Breitseite 6 der lichtleitenden Platte 3 anschließt und auch opak ausgebildet sein kann, um damit eventuell bestehende Unterschiede in der Helligkeit der Hinterleuchtung der Anzeige 2 zu vermindern. Die Anzeige 2 kann jedoch auch auf der lichtleitenden Platte 3 vorgesehen sein, was nicht näher dargestellt wurde.

Um auch die Umgebung der Hinweistafel 1 beleuchten zu können, weist die Hinweistafel 1 ein zweites Leuchtmittel 8 auf. Dieses Leuchtmittel 8 ist mit Linsen 9, 10 optisch verbundenen, um damit das Abstrahlverhalten des Leuchtmittels 8 in gewünschter Weise zu verändern. Erfindungsgemäß werden die Linsen 9, 10 von der lichtleitenden Platte 3 ausgebildet. Das zweite Leuchtmittel 8 stahlt zur Beleuchtung der Umgebung der Hinweistafel 1 über die Schmalseite 11 der lichtleitenden Platte 3 Licht ab.

Das zweite Leuchtmittel 8 wird durch zwei lichtemittierende Dioden 12, 13 ausgebildet. Hierzu wird im Allgemeinen erwähnt, dass auch ein Gehäuse der lichtemittierenden Dioden 12, 13 bekanntermaßen eine Linse aufweisen kann - was nicht näher dargestellt wurde. Die lichtleitende Platte 3 bildet jedoch auch eine Linse 9, 10 im jeweiligen optischen Weg des vom zweiten Leuchtmittel 8 abgestrahlten Lichts 14 zur Beleuchtung der Umgebung aus. Es braucht nicht weiter erwähnt werden, dass es auch vorstellbar ist, mehrere lichtemittierende Dioden je einer Linse 9, 10 zuzuordnen. Zudem kann das Leuchtmittel 8 von einer oder mehreren Dioden ausgebildet werden, die über mindestens eine gemeinsame Linse abstrahlen.

Erfindungsgemäß wird das zweite Leuchtmittel 8 in einer Ausnehmung 17 bzw. 18 in der Breitseite 6 der lichtleitenden Platte 3 vorgesehen. Solche eine nach außen offene Ausnehmung 17, 18 kann beispielsweise durch Fräsbearbeitung in das Vollmaterial der Platte 3 einfach eingebracht werden. Durch diese erfindungsgemäße Konstruktion ergeben sich für die Hinweistafel 1 konstruktive Einfachheit, hohe Standfestigkeit und eine kompakte Bauweise. Da sich außerdem die Anzeige 2 über die Ausnehmung 17, 18 erstrecken, werden die Mittel zur Umgebungsbeleuchtung optisch verdeckt.

Die Schmalseite 11 der lichtleiteten Platte 3 bildet die plane lichtbrechende Fläche der jeweiligen plankonvexen Linse 9, 10 aus. Die plankonvexen Linsen 9, 10 lassen sich dadurch vergleichsweise einfach herstellen, was eine kostengünstige Hinweistafel 1 schafft.

Die andere lichtbrechende Fläche der jeweiligen Linse 9, 10 wird durch eine Ausnehmungsfläche 15, 16 der jeweiligen Ausnehmung 17, 18 gebildet. Diese lichtbrechenden Flächen 15, 16 werden durch die Leuchtmittel 12, 13 mit Licht 14 bestrahlt. Die Leuchtmittel 12, 13 sind über diese lichtbrechenden Ausnehmungsflächen 15, 16 mit den jeweiligen Linsen 9, 10 optisch gekoppelt.

Herstellungstechnisch einfach wird als lichtbrechende Fläche der Linse jene Ausnehmungsfläche 15, 16 der jeweiligen Ausnehmung 17, 18 herangezogen, die der Schmalseite 11 zugewandt ist.

Das zweite Leuchtmittel 8 bzw. seine Dioden 12, 13 sind in die Ausnehmung 17 bzw. 18 eingesetzt und damit vor Beschädigungen vorteilhaft geschützt.

Zur Kühlung der Dioden 12, 13 sind diese an einem Kühlkörper 19 befestigt. Dieser Kühlkörper 19 ragt in die Ausnehmung 17, 18 ein und verläuft teilweise außerhalb der Ausnehmung 17, 18, um damit eine erhöhte Wärmeableitung zu schaffen. Wie der Fig. 2 entnommen werden kann, schließt der Kühlkörper bündig mit der lichtleitenden Platte 3 ab, wodurch die geringe Bautiefe der Hinweistafel 1 durch dieses Konstruktionselement nicht beeinträchtigt.

Zudem bildet der Kühlkörper 19 einen Reflektor 20 aus, um das eingekoppelte Anzeigelicht 4 des ersten Leuchtmittels 5 in der lichtleitenden Platte 3 zu halten.

Wie der Fig. 2 zu entnehmen, wird in die lichtleitende Platte 3 das Anzeigelicht 4 des ersten Leuchtmittels 5 über die obere Schmalseite 21 eingekoppelt. Das erste Leuchtmittel 5 weist hierfür mehrere lichtemittierende Dioden 22 auf. Es ist aber auch vorstellbar, dass das Anzeigelicht 4 über eine andere Schmalseite 21 bzw. über mehrere Schmalseiten 21 der Platte 3 eingekoppelt wird.

Zudem ist der Fig. 2 zu entnehmen, dass die Ausnehmungen 17, 18 im Bereich der unteren Schmalseite 11 der lichtleitenden Platte 3 angeordnet sind.

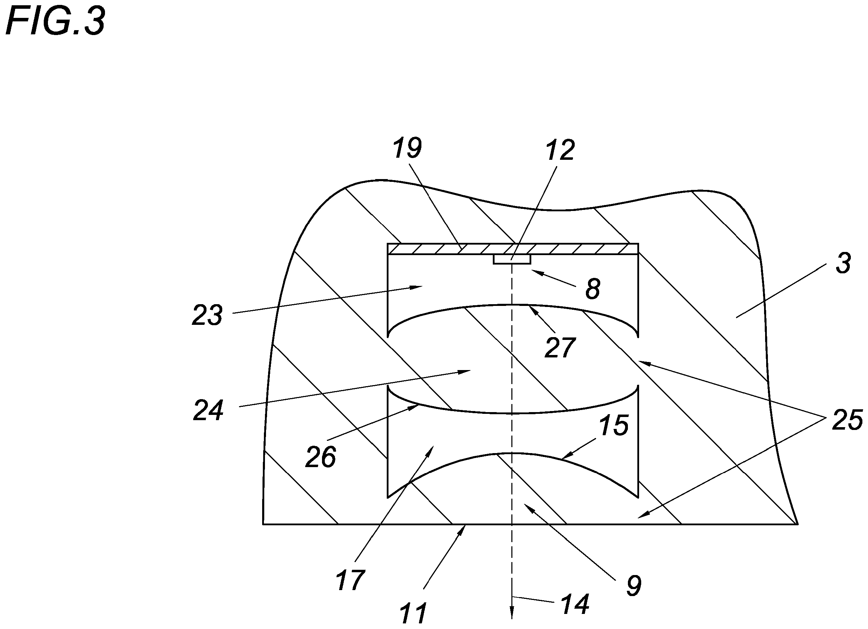

Nach Fig. 3 wird ein weiteres Ausführungsbeispiel gezeigt, das zum Unterschied zu dem nach Fig. 1 und 2 dargestellten mit seiner lichtleitenden Platte 3 ein Linsensystem 25 aus zwei Linsen 9 und 24 ausbildet. Zu der nach der Fig. 1 bekannten Ausbildung der Linse 9 bildet sich hier auch eine Linse 24 aus, deren lichtbrechenden Flächen durch die Ausnehmungsflächen 26, 27 von zwei Ausnehmungen 17, 23 ausgebildet werden.

Mithilfe eines Linsensystems 25 kann die Abstrahlung des Lichts des zweiten Leuchtmittels 8 noch weiter beeinflusst bzw. geforderte Abstrahlwinkel für geforderte Beleuchtungsbereiche erfüllt werden.

Der Fig. 2 kann entnommen werden, dass die Anzeige 12 auf der der Breitseite 6 mit der Ausnehmung 17, 18, 23 gegenüberliegenden Breitseite 6 der lichtleitenden Platte 3 vorgesehen ist. Die Auswirkung der Ausnehmungen 17, 18, 23 auf die Gleichmäßigkeit der Hintergrundbeleuchtung der Anzeige 2 wird damit reduziert, insbesondere weil diese Ausnehmungen 17, 18, 23 die Platte 3 nicht durchdringen.

Wie der Fig 1 weiter zu entnehmen, sind die Schmalseiten 11 und seitlichen Schmalseiten 28 plan ausgeführt. Die Anzeige 2 schließt mit der Schmalseite 11 der lichtleitenden Platte 3, insbesondere mit der Platte 3, bündig ab, was die Ausnehmungen 17, 18, 23 zur Aufnahme des zweiten Leuchtmittels 12 bzw. zur Ausbildung der Linsen 9, 10, 24 optisch verdeckt. Es stehen nämlich keine Konstruktionsmerkmale der unteren Schmalseite 11 vor.

## Patentansprüche

1. Hinweistafel, insbesondere für eine Notbeleuchtungsanlage, mit einer Anzeige (2), mit zur Hinterleuchtung der Anzeige (2) vorgesehenen lichtleitenden Platte (3), die Breit- und Schmalseiten (6, 11) sowie mindestens eine Ausnehmung (17, 18, 23) aufweist, mit einem ersten Leuchtmittel (5), das, mit der lichtleitenden Platte (3) zum Einbringen von Anzeigelicht (4) optisch verbunden, die Anzeige (2) über die Breitseite (6) der lichtleitenden Platte (3) hinterleuchtet, mit mindestens einem zweiten in der Ausnehmung (17, 18, 23) der lichtleitenden Platte (3) vorgesehenem und damit optisch verbundenen Leuchtmittel (8), das mit seinem abgestrahlten Licht (14) über mindestens eine der Schmalseiten (11) der lichtleitenden Platte (3) die Umgebung der Hinweistafel (1) wenigstens bereichsweise beleuchtet, und mit mindestens einer Linse (9, 10, 24), **dadurch gekennzeichnet, dass** die, das zweite Leuchtmittel (8) aufnehmende Ausnehmung (17, 18, 23) in einer Breitseite (6) der lichtleitenden Platte (3) vorgesehen ist, und dass die lichtleitende Platte (3) die Linse (9, 10, 24), die mit dem zweiten Leuchtmittel (8) optisch verbundenen ist, ausbildet, wobei die lichtleitende Platte (3) die Linse (9, 10, 24) im optischen Weg des vom zweiten Leuchtmittel (8) abgestrahlten Lichts (14) zur Beleuchtung der Umgebung ausbildet.

2. Hinweistafel nach Anspruch 1, **dadurch gekennzeichnet, dass** das zweite Leuchtmittel (8) mindestens eine lichtemittierende Diode (12, 13) aufweist.

3. Hinweistafel nach Anspruch 1 oder 2, **dadurch gekennzeichnet, dass** eine lichtbrechende Fläche einer Linse (9, 10) durch die plane Schmalseite (11) der lichtleitenden Platte (3) ausbildet wird.

4. Hinweistafel nach Anspruch 1, 2 oder 3, **dadurch gekennzeichnet, dass** die lichtleitende Platte (3) mindestens eine plankonvexe Linse (9, 10) ausbildet.

5. Hinweistafel nach einem der Ansprüche 1 bis 4, **dadurch gekennzeichnet, dass** eine lichtbrechende Fläche einer Linse (9, 10) von einer der Ausnehmungsflächen (15, 16) der Ausnehmung (17, 18) ausbildet wird.

6. Hinweistafel nach einem der Ansprüche 1 bis 5, **dadurch gekennzeichnet, dass** lichtbrechende Flächen einer Linse (24) durch Ausnehmungsflächen (15, 26, 27) zweier Ausnehmungen (17, 23) ausgebildet werden.

7. Hinweistafel nach einem der Ansprüche 1 bis 6, **dadurch gekennzeichnet, dass** die lichtleitende Platte (3) mindestens ein Linsensystem (25) mit mehreren Linsen (9, 24) für das zweite Leuchtmittel (8) ausbildet.

8. Hinweistafel nach einem der Ansprüche 1 bis 7, **dadurch gekennzeichnet, dass** ein im Wärmeverbund mit dem zweiten Leuchtmittel (8) stehender Kühlkörper (19) einen Reflektor (20) für ein in die lichtleitende Platte (3) eingekoppeltes Anzeigelicht (4) des ersten Leuchtmittels (5) ausbildet.

9. Hinweistafel nach Anspruch 8, **dadurch gekennzeichnet, dass** der in die Ausnehmung (17, 18, 23) eingesetzte Kühlkörper (19) mit der lichtleitenden Platte (3) bündig abschließt.

10. Hinweistafel nach einem der Ansprüche 1 bis 9, **dadurch gekennzeichnet, dass** die Ausnehmung (17, 18, 23) im Bereich der unteren Schmalseite (11) der lichtleitenden Platte (3) angeordnet ist.

11. Hinweistafel nach einem der Ansprüche 1 bis 10, **dadurch gekennzeichnet, dass** das erste Leuchtmittel (5) aus lichtemittierenden Dioden (22) besteht und über mindestens eine, insbesondere die obere, Schmalseite (21) der lichtleitenden Platte (3) optisch verbunden ist.

12. Hinweistafel nach einem der Ansprüche 1 bis 11, **dadurch gekennzeichnet, dass** die Anzeige (12) auf der, der Breitseite (6) mit der Ausnehmung (17, 18, 23) gegenüberliegenden Breitseite (6) der lichtleitenden Platte (3) vorgesehen ist.

13. Hinweistafel nach Anspruch 12, **dadurch gekennzeichnet, dass** die Anzeige (2) mit der unteren Schmalseite (11) der lichtleitenden Platte (3) bündig abschließt.

## Claims

1. Information display panel, more particularly for an emergency lighting system, having a display (2), having a light-conducting plate (3) which is provided for backlighting the display (2) and has broad and narrow sides (6, 11) and at least one recess (17, 18, 23), having a first illuminating means (5) which, optically connected to the light-conducting plate (3) for introducing display light (4), backlights the display (2) via the broad side (6) of the light-conducting plate (3), having at least one second illuminating means (8) which is provided in the recess (17, 18, 23) of the light-conducting plate (3) and is optically connected thereto, and which, with its emitted light (14), illuminates the surroundings of the information panel (1) at least in regions via at least one of the narrow sides (11) of the light-conducting plate (3), and having at least one lens (9, 10, 24), **characterized in that** the recess (17, 18, 23) accommodating the second illuminating means (8) is provided in a broad side (6) of the light-conducting plate (3), and **in that** the light-conducting plate (3) forms the lens (9, 10, 24) which is optically connected to the second illuminating means (8), wherein the light-conducting plate (3) forms the lens (9, 10, 24) in the optical path of the light (14) emitted by the second illuminating means (8) for illuminating the surroundings.

2. Information display panel according to claim 1, **characterized in that** the second illuminating means (8) comprises at least one light-emitting diode (12, 13).

3. Information display panel according to claim 1 or 2, **characterized in that** a light-refracting surface of a lens (9, 10) is formed by the plane narrow side (11) of the light-conducting plate (3).

4. Information display panel according to claim 1, 2 or 3, **characterized in that** the light-conducting plate (3) forms at least one plano-convex lens (9, 10).

5. Information display panel according to one of claims 1 to 4, **characterized in that** a light-refracting surface of a lens (9, 10) is formed by one of the recess surfaces (15, 16) of the recess (17, 18).

6. Information display panel according to one of claims 1 to 5, **characterized in that** light-refracting surfaces of a lens (24) are formed by recess surfaces (15, 26, 27) of two recesses (17, 23).

7. Information display panel according to one of claims 1 to 6, **characterized in that** the light-conducting plate (3) forms at least one lens system (25) with a plurality of lenses (9, 24) for the second illuminating means (8).

8. Information display panel according to one of claims 1 to 7, **characterized in that** a heat sink (19) in thermal contact with the second illuminating means (8) forms a reflector (20) for an indicator light (4) of the first illuminating means (5) coupled into the light-conducting plate (3).

9. Information display panel according to claim 8, **characterized in that** the heat sink (19) inserted into the recess (17, 18, 23) is flush with the light-conducting plate (3).

10. Information display panel according to one of claims 1 to 9, **characterized in that** the recess (17, 18, 23) is arranged in the region of the lower narrow side (11) of the light-conducting plate (3).

11. Information display panel according to one of claims 1 to 10, **characterized in that** the first illuminating means (5) consists of light-emitting diodes (22) and is optically connected via at least one, more particularly the upper, narrow side (21) of the light-conducting plate (3).

12. Information display panel according to one of claims 1 to 11, **characterized in that** the display (12) is provided on the broad side (6) of the light-conducting plate (3) opposite the broad side (6) with the recess (17, 18, 23).

13. Information display panel according to claim 12, **characterized in that** the display (2) is flush with the lower narrow side (11) of the light-conducting plate (3).

## Revendications

1. Panneau d'information, en particulier pour une installation d'éclairage de secours, avec un afficheur (2), avec une plaque conductrice de lumière (3) prévue pour rétroéclairer l'afficheur (2), qui présente des côtés larges et étroits (6, 11) ainsi qu'au moins un évidement (17, 18, 23), avec un premier moyen d'éclairage (5) qui, relié optiquement à la plaque conductrice de lumière (3) pour introduire une lumière d'afficheur (4), rétroéclaire l'afficheur (2) par le côté large (6) de la plaque conductrice de lumière (3), avec au moins un deuxième moyen d'éclairage (8) prévu dans l'évidement (17, 18, 23) de la plaque conductrice de lumière (3) et donc relié optiquement à celle-ci, qui, avec sa lumière émise (14) par au moins un des côtés étroits (11) de la plaque conductrice de lumière (3), éclaire l'environnement du panneau d'information (1) au moins dans certaines zones, et avec au moins une lentille (9, 10, 24), **caractérisé en ce que** l'évidement (17, 18, 23) recevant le deuxième moyen d'éclairage (8) est prévu dans un côté large (6) de la plaque conductrice de lumière (3) et que la plaque conductrice de lumière (3) forme la lentille (9, 10, 24) qui est reliée optiquement au deuxième moyen d'éclairage (8), la plaque conductrice de lumière (3) formant la lentille (9, 10, 24) dans le chemin optique de la lumière émise (14) par le deuxième moyen d'éclairage (8) pour éclairer l'environnement.

2. Panneau d'information selon la revendication 1, **caractérisé en ce que** le deuxième moyen d'éclairage (8) présente au moins une diode électroluminescente (12, 13).

3. Panneau d'information selon la revendication 1 ou 2, **caractérisé en ce qu'**une surface réfringente d'une lentille (9, 10) est formée par le côté étroit plan (11) de la plaque conductrice de lumière (3).

4. Panneau d'information selon la revendication 1, 2 ou 3, **caractérisé en ce que** la plaque conductrice de lumière (3) forme au moins une lentille plan-convexe (9, 10).

5. Panneau d'information selon l'une des revendications 1 à 4, **caractérisé en ce qu'**une surface réfringente d'une lentille (9, 10) est formée par l'une des surfaces d'évidement (15, 16) de l'évidement (17, 18).

6. Panneau d'information selon l'une des revendications 1 à 5, **caractérisé en ce que** des surfaces réfringentes d'une lentille (24) sont formées par des surfaces d'évidement (15, 26, 27) de deux évidements (17, 23).

7. Panneau d'information selon l'une des revendications 1 à 6, **caractérisé en ce que** la plaque conductrice de lumière (3) forme au moins un système de lentilles (25) avec plusieurs lentilles (9, 24) pour le deuxième moyen d'éclairage (8).

8. Panneau d'information selon l'une des revendications 1 à 7, **caractérisé en ce qu'**un dissipateur thermique (19) en contact thermique avec le deuxième moyen d'éclairage (8) forme un réflecteur (20) pour une lumière d'afficheur (4) du premier moyen d'éclairage (5) couplée dans la plaque conductrice de lumière (3).

9. Panneau d'information selon la revendication 8, **caractérisé en ce que** le dissipateur thermique (19) inséré dans l'évidement (17, 18, 23) se termine en affleurement avec la plaque conductrice de lumière (3).

10. Panneau d'information selon l'une des revendications 1 à 9, **caractérisé en ce que** l'évidement (17, 18, 23) est disposé dans la zone du côté étroit inférieur (11) de la plaque conductrice de lumière (3).

11. Panneau d'information selon l'une des revendications 1 à 10, **caractérisé en ce que** le premier moyen d'éclairage (5) est constitué de diodes électroluminescentes (22) et est relié optiquement par au moins un côté étroit, en particulier supérieur (21), de la plaque conductrice de lumière (3).

12. Panneau d'information selon l'une des revendications 1 à 11, **caractérisé en ce que** l'afficheur (12) est prévu sur le côté large (6) de la plaque conductrice de lumière (3) opposé au côté large (6) présentant l'évidement (17, 18, 23).

13. Panneau d'information selon la revendication 12, **caractérisé en ce que** l'afficheur (2) se termine en affleurement avec le côté étroit inférieur (11) de la plaque conductrice de lumière (3).
